# EUROPEAN PATENT APPLICATION

(11) **EP 4 725 989 A1**
(43) Date of publication of application: **15.04.2026**
(21) Application number: 24819378.1
(22) Date of filing: 06.06.2024
(51) Int. Cl.: C08L 1/00, C08J 3/05, C08J 3/20, C08J 5/04, C08K 5/092, C08L 29/04, C08L 31/04, C08L 79/02, C08L 101/00

(54) **RESIN COMPOSITION, MOLDED BODY USING SAME, AND METHOD FOR PRODUCING RESIN COMPOSITION**

(30) Priority: 06.06.2023 JP 2023093504
(71) Applicant: Shiraishi Central Laboratories Co., Ltd., Amagasaki-shi, Hyogo 660-0085 (JP); Shiraishi Kogyo Kaisha, Ltd., Osaka-shi, Osaka 530-0005 (JP)
(72) Inventor: MORISHITA, Shigeru, Kaga-gun, Okayama 709-2344 (JP); YANO, Hiroyuki, Uji-shi, Kyoto 611-0003 (JP); USUKI, Arimitsu, Kyoto-shi, Kyoto 606-8501 (JP); EGUCHI, Kenichiro, Amagasaki-shi, Hyogo 660-0085 (JP)
(74) Representative: Hoffmann Eitle
(86) International application number: PCT/JP2024/020659
(87) International publication number: WO 2024/253150

(57) **Abstract**

A resin composition, which is a melt-kneaded product of a mixture (α) comprising a cellulosic substance (A) and a polyvinyl acetate polymer emulsion (B) containing polyvinyl alcohol as a dispersant, and a thermoplastic resin (C).

## Description

### [Technical Field]

The present invention relates to a resin composition comprising a cellulosic substance, a molded article using the same, and a method for producing the resin composition.

### [Background Art]

Fiber-reinforced plastics, being lightweight and excellent in mechanical strength, are used for exterior panels and interior materials for automobiles, housings for electrical equipment, building materials, and the like in order to suppress greenhouse gas emissions, and are expected as one of the means for building a decarbonized society. In particular, increasing the strength of fiber-reinforced plastics and their efficient production can reduce the amount of plastic used and the amount of energy used, and are expected as one of the means to efficiently suppress greenhouse gas emissions.

Japanese Unexamined Patent Application Publication No. Sho 63-33442 (Patent Literature 1) discloses a polyolefin composition containing 10 to 97% by weight of a polyolefin, 3 to 90% by weight of an ethylene-vinyl ester copolymer or a copolymer of ethylene with an unsaturated carboxylic acid or a derivative thereof, and, with respect to a total of 100 parts by weight of the polyolefin and the copolymer, 10 to 120 parts by weight of plant fibers mainly composed of fiberized cellulose. Japanese Unexamined Patent Application Publication No. 2018-104650 (Patent Literature 2) discloses a resin composition for melt molding containing a saponified ethylene-vinyl ester-based copolymer and cellulose nanofiller, and also describes that the resin composition can contain other thermoplastic resins such as a polyolefin-based resin. Furthermore, Japanese Unexamined Patent Application Publication No. 2019-218450 (Patent Literature 3) discloses a method for producing a cellulose resin composite, wherein, in the method for producing a cellulose resin composite containing cellulose and a polypropylene resin, cellulose, a polypropylene resin, an acid-modified polyolefin resin, and polyvinyl alcohol with a viscosity coefficient of 0.20 or less are kneaded in a water-containing state.

### [Citation List]

### [Patent Literature]

[PTL 1] Japanese Unexamined Patent Application Publication No. Sho 63-33442
[PTL 2] Japanese Unexamined Patent Application Publication No. 2018-104650
[PTL 3] Japanese Unexamined Patent Application Publication No. 2019-218450

### [Summary of Invention]

### [Technical Problem]

However, in molded articles made from conventional resin compositions containing cellulosic fibers, the mechanical strength was not always sufficiently high.

The present invention has been made in view of the problems of the prior art described above, and an object thereof is to provide a resin composition that contains a cellulosic substance and a thermoplastic resin and is capable of forming a molded article with excellent mechanical strength, a molded article made therefrom, and a method for producing the resin composition.

### [Solution to Problem]

As a result of earnestly research to achieve the above object, the present inventors have found that by using a resin composition obtained by melt-kneading a mixture (α) comprising a cellulosic substance (A) and a polyvinyl acetate polymer emulsion (B) containing polyvinyl alcohol as a dispersant, with a thermoplastic resin (C), a molded article with excellent mechanical strength can be obtained, and have completed the present invention.

That is, the present invention provides the following aspects.
[1] A resin composition, which is a melt-kneaded product of a mixture (α) comprising a cellulosic substance (A) and a polyvinyl acetate polymer emulsion (B) containing polyvinyl alcohol as a dispersant, and a thermoplastic resin (C).
[2] The resin composition according to [1], wherein the mixture (α) further comprises a polyamine (D).
[3] The resin composition according to [2], wherein the mixture (α) further comprises a carboxylic acid (E).
[4] The resin composition according to [2], which is a melt-kneaded product of the mixture (α) and a melt-kneaded product (β) comprising the thermoplastic resin (C) and a carboxylic acid (E).
[5] The resin composition according to any one of [1] to [4], wherein the content of the polyvinyl acetate polymer emulsion (B) in the resin composition is 0.1 to 15% by mass in terms of the polyvinyl acetate polymer.
[6] A molded article, which is made from the resin composition according to any one of [1] to [5].
[7] A method for producing a resin composition, comprising: a step of mixing a cellulosic substance (A) and a polyvinyl acetate polymer emulsion (B) containing polyvinyl alcohol as a dispersant to prepare a mixture (α); and a step of melt-kneading the mixture (α) and a thermoplastic resin (C).
[8] The method for producing a resin composition according to [7], wherein a polyamine (D) is further mixed into the mixture (α).
[9] The method for producing a resin composition according to [8], wherein a carboxylic acid (E) is further mixed into the mixture (α).
[10] The method for producing a resin composition according to [8], further comprising a step of melt-kneading the thermoplastic resin (C) and a carboxylic acid (E) to prepare a melt-kneaded product (β), wherein the mixture (α) and the melt-kneaded product (β) are melt-kneaded.
[11] The method for producing a resin composition according to any one of [7] to [10], wherein the cellulosic substance (A) and the polyvinyl acetate polymer emulsion (B) are mixed such that the content of the polyvinyl acetate polymer emulsion (B) in the resulting resin composition is 0.1 to 15% by mass in terms of the polyvinyl acetate polymer.

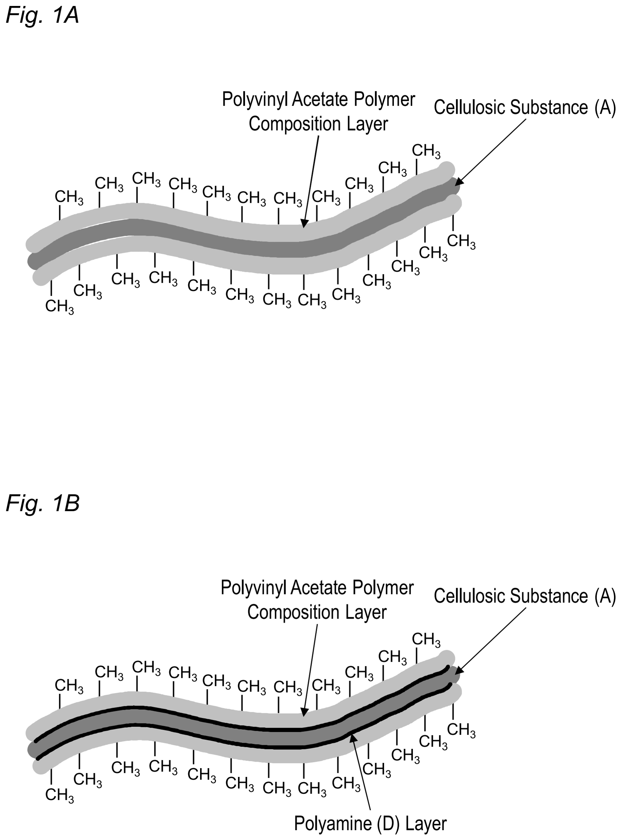

The reason why the molded article made from the resin composition of the present invention has excellent mechanical strength is not necessarily clear, but the present inventors presume as follows. That is, the resin composition of the present invention is a melt-kneaded product of the mixture (α) containing the cellulosic substance (A) and the polyvinyl acetate polymer emulsion (B), and the thermoplastic resin (C). In the mixture (α), it is presumed that the polyvinyl acetate polymer emulsion (B) (preferably, granular polyvinyl acetate polymer whose surface is shielded by polyvinyl alcohol) adheres to the surface of the cellulosic substance (A). When such a mixture (α) and the thermoplastic resin (C) are melt-kneaded, it is presumed that due to the shielding action of the polyvinyl acetate polymer emulsion (B) (the granular polyvinyl acetate polymer) adhered to the surface of the cellulosic substance (A), the cellulosic substance (A) is highly dispersed in the thermoplastic resin (C) without aggregating. Thereafter, when water is removed by continuing the melt-kneading, it is presumed that a polyvinyl acetate polymer composition layer containing polyvinyl alcohol is formed on the surface of the cellulosic substance (A) by the adhered polyvinyl acetate polymer emulsion (B) (the granular polyvinyl acetate polymer), as shown in Fig. 1A. Since a polyvinyl acetate polymer (a homopolymer of vinyl acetate) has a hydrophobic methyl group in its side chain, the formation of the polyvinyl acetate polymer composition layer on the surface of the cellulosic substance (A) imparts hydrophobicity to the surface of the cellulosic substance (A). As a result, the affinity between the thermoplastic resin (C) and the surface of the cellulosic substance (A) increases, and the cellulosic substance (A) is highly dispersed in the thermoplastic resin (C); therefore, it is presumed that the molded article made from the resin composition of the present invention has excellent mechanical strength.

When the resin composition of the present invention further comprises the polyamine (D), it is presumed that in the mixture (α), the polyamine (D) adheres to the surface of the cellulosic substance (A) to form a polyamine (D) layer, and furthermore, the polyvinyl acetate polymer emulsion (B) (preferably, granular polyvinyl acetate polymer whose surface is shielded by polyvinyl alcohol) adheres to the surface of the polyamine (D) layer. When such a mixture (α) and the thermoplastic resin (C) are melt-kneaded, it is presumed that due to the shielding action of the polyvinyl acetate polymer emulsion (B) (the granular polyvinyl acetate polymer) adhered to the surface of the polyamine (D) layer on the surface of the cellulosic substance (A), the cellulosic substance (A) is highly dispersed in the thermoplastic resin (C) without aggregating. Thereafter, when water is removed by continuing the melt-kneading, it is presumed that the polyamine (D) layer and a polyvinyl acetate polymer composition layer containing polyvinyl alcohol are formed on the surface of the cellulosic substance (A) by the polyamine (D) layer and the polyvinyl acetate polymer emulsion (B) (the granular polyvinyl acetate polymer) adhered to its surface, as shown in Fig. 1B. This polyvinyl acetate polymer composition layer is strongly adhered to the surface of the cellulosic substance (A) via the polyamine (D) layer; therefore, it is presumed that the mechanical strength of the molded article made from the resin composition of the present invention is improved.

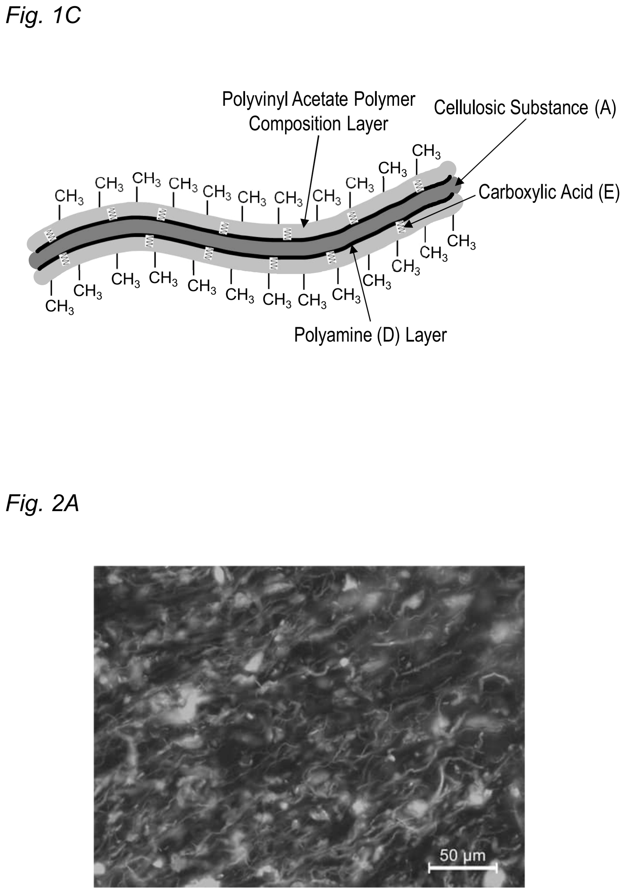

Furthermore, in the case where the resin composition of the present invention is a melt-kneaded product of a mixture (α) containing the cellulosic substance (A), the polyvinyl acetate polymer emulsion (B), the polyamine (D), and the carboxylic acid (E), with the thermoplastic resin (C), it is presumed that in the mixture (α), a layer containing a reaction product of the polyamine (D) and the carboxylic acid (E) is formed on the surface of the cellulosic substance (A), and furthermore, the polyvinyl acetate polymer emulsion (B) (preferably, granular polyvinyl acetate polymer whose surface is shielded by polyvinyl alcohol) adheres to the surface of the reaction product layer. When such a mixture (α) and the thermoplastic resin (C) are melt-kneaded, it is presumed that due to the shielding action of the polyvinyl acetate polymer emulsion (B) (the granular polyvinyl acetate polymer) adhered to the surface of the reaction product layer on the surface of the cellulosic substance (A), the cellulosic substance (A) is highly dispersed in the thermoplastic resin (C) without aggregating. Thereafter, when water is removed by continuing the melt-kneading, it is presumed that a reaction product layer of the polyamine (D) and the carboxylic acid (E) and a polyvinyl acetate polymer composition layer containing polyvinyl alcohol are formed on the surface of the cellulosic substance (A) by the reaction product layer and the polyvinyl acetate polymer emulsion (B) (the granular polyvinyl acetate polymer) adhered to its surface, as shown in Fig. 1C. This polyvinyl acetate polymer composition layer is even more strongly adhered to the surface of the cellulosic substance (A) via the layer containing the reaction product of the polyamine (D) and the carboxylic acid (E); therefore, it is presumed that the mechanical strength of the molded article made from the resin composition of the present invention is further improved.

In the case where the resin composition of the present invention is a melt-kneaded product of a mixture (α) containing the cellulosic substance (A), the polyvinyl acetate polymer emulsion (B), and the polyamine (D), with a melt-kneaded product (β) containing the thermoplastic resin (C) and the carboxylic acid (E), it is presumed that in the mixture (α), the polyamine (D) adheres to the surface of the cellulosic substance (A) to form a polyamine (D) layer, and furthermore, the polyvinyl acetate polymer emulsion (B) (preferably, granular polyvinyl acetate polymer whose surface is shielded by polyvinyl alcohol) adheres to the surface of the polyamine (D) layer. When such a mixture (α) and the melt-kneaded product (β) are melt-kneaded, the polyamine (D) on the surface of the cellulosic substance (A) reacts with the carboxylic acid (E); therefore, a layer containing a reaction product of the polyamine (D) and the carboxylic acid (E) is formed on the surface of the cellulosic substance (A), and it is presumed that the polyvinyl acetate polymer emulsion (B) (the granular polyvinyl acetate polymer) becomes adhered to the surface of the reaction product layer. It is presumed that due to the shielding action of the polyvinyl acetate polymer emulsion (B) (the granular polyvinyl acetate polymer) adhered to the surface of the reaction product layer on the surface of the cellulosic substance (A), the cellulosic substance (A) is highly dispersed in the thermoplastic resin (C) without aggregating. Thereafter, when water is removed by continuing the melt-kneading, it is presumed that a reaction product layer of the polyamine (D) and the carboxylic acid (E) and a polyvinyl acetate polymer composition layer containing polyvinyl alcohol are formed on the surface of the cellulosic substance (A) by the reaction product layer and the polyvinyl acetate polymer emulsion (B) (the granular polyvinyl acetate polymer) adhered to its surface, as shown in Fig. 1C. This polyvinyl acetate polymer composition layer is even more strongly adhered to the surface of the cellulosic substance (A) via the layer containing the reaction product of the polyamine (D) and the carboxylic acid (E); therefore, it is presumed that the mechanical strength of the molded article made from the resin composition of the present invention is further improved.

### [Advantageous Effects of Invention]

According to the present invention, it is possible to obtain a molded article which is made from a resin composition comprising a cellulosic substance and a thermoplastic resin and has excellent mechanical strength.

### [Brief Description of Drawings]

[Fig. 1A] Fig. 1A is a schematic diagram showing an example of the state of a cellulosic substance (A) and a polyvinyl acetate polymer composition layer in the resin composition of the present invention.
[Fig. 1B] Fig. 1B is a schematic diagram showing an example of the state of a cellulosic substance (A), a polyvinyl acetate polymer composition layer, and a polyamine (D) layer in the resin composition of the present invention.
[Fig. 1C] Fig. 1C is a schematic diagram showing an example of the state of a cellulosic substance (A), a polyvinyl acetate polymer composition layer, a polyamine (D), and a carboxylic acid (E) in the resin composition of the present invention.
[Fig. 2A] Fig. 2A is a fluorescence micrograph of the pellet-shaped resin composition obtained in Example 1.
[Fig. 2B] Fig. 2B is a fluorescence micrograph of the pellet-shaped resin composition obtained in Example 2.
[Fig. 2C] Fig. 2C is a fluorescence micrograph of the pellet-shaped resin composition obtained in Example 3.
[Fig. 2D] Fig. 2D is a fluorescence micrograph of the pellet-shaped resin composition obtained in Example 4.
[Fig. 3] Fig. 3 is a fluorescence micrograph of the pellet-shaped resin composition obtained in Comparative Example 1.
[Fig. 4] Fig. 4 is a schematic diagram showing an example of the state of a cellulosic substance (A) and an ethylene-vinyl acetate copolymer emulsion in a conventional resin composition.

### [Description of Embodiments]

Hereinafter, the present invention will be described in detail based on its preferred embodiments.

### [Resin Composition]

First, the resin composition of the present invention will be described. The resin composition of the present invention is a melt-kneaded product of a mixture (α) comprising a cellulosic substance (A) and a polyvinyl acetate polymer emulsion (B) containing polyvinyl alcohol as a dispersant, and a thermoplastic resin (C). A molded article made from this resin composition has excellent mechanical strength.

In the resin composition of the present invention, it is preferable that the mixture (α) further comprises a polyamine (D), that is, contains the cellulosic substance (A), the polyvinyl acetate polymer emulsion (B), and the polyamine (D). A molded article made from a resin composition that is a melt-kneaded product of this mixture (α) and a thermoplastic resin (C) has even more excellent mechanical strength.

Furthermore, in the resin composition of the present invention, it is more preferable that the mixture (α) further comprises a polyamine (D) and a carboxylic acid (E), that is, contains the cellulosic substance (A), the polyvinyl acetate polymer emulsion (B), the polyamine (D), and the carboxylic acid (E). A molded article made from a resin composition that is a melt-kneaded product of this mixture (α) and a thermoplastic resin (C) has particularly excellent mechanical strength.

It is also more preferable that the resin composition of the present invention is a melt-kneaded product of a mixture (α) further comprising a polyamine (D), that is, a mixture (α) containing the cellulosic substance (A), the polyvinyl acetate polymer emulsion (B), and the polyamine (D), and a melt-kneaded product (β) comprising the thermoplastic resin (C) and a carboxylic acid (E). A molded article made from this resin composition also has particularly excellent mechanical strength.

Hereinafter, each component used in the present invention will be described.

### (A) Cellulosic Substance

The cellulosic substance (A) used in the present invention is not particularly limited as long as it can be used for fiber-reinforced plastics, and examples thereof include cellulosic fibers such as pulp (plant fibers) and cellulosic powders such as wood flour. Such a cellulosic substance (A) may be a refined one (refined cellulosic substance) or an unrefined one (unrefined cellulosic substance), but a refined cellulosic substance is preferable from the viewpoint of increasing the strength of a molded article made from the resin composition of the present invention. Such a refined cellulosic substance may be one obtained by refining an unrefined cellulosic substance in advance, or may be one obtained by refining an unrefined cellulosic substance when producing the resin composition of the present invention.

Examples of the refined cellulosic substance include cellulosic fibers which are refined (defibrated) (refined cellulosic fibers) and cellulosic powder which is refined (refined cellulosic powder), and examples of the unrefined cellulosic substance include cellulosic fibers which are unrefined (undefibrated) (unrefined cellulosic fibers) and cellulosic powder which is unrefined (unrefined cellulosic powder) .

Examples of the unrefined cellulosic fibers include natural cellulose fibers such as unrefined (undefibrated) pulp. The average fiber diameter of such unrefined cellulosic fibers is not particularly limited, but is generally 50 to 60 µm. Examples of the refined cellulosic fibers include refined (defibrated) pulp. The average fiber diameter of such refined cellulosic fibers is preferably 1 nm to 10 µm, more preferably 1 nm to 1 µm, and still more preferably 1 nm to 500 nm, from the viewpoint of increasing the strength of a molded article made from the resin composition of the present invention. The refined cellulosic fibers are preferably those obtained by microfibrillating (MF-treating) the unrefined cellulosic fibers (MF-treated cellulosic fibers) from the viewpoint of increasing the strength of a molded article made from the resin composition of the present invention. Furthermore, in the MF-treated cellulosic fibers, not all of the unrefined cellulosic fibers need to be uniformly MF-treated. For example, cellulosic fibers in which the surface of a thick portion (for example, a portion with a diameter of about 5 µm) of an unrefined cellulosic fiber is MF-treated to a diameter of about 10 nm (partially MF-treated cellulosic fibers) can also be suitably used as the cellulosic substance (A) in the present invention.

Examples of the unrefined cellulosic powder include unrefined wood flour. The average particle size of such unrefined cellulosic powder is not particularly limited, but is generally 300 to 500 µm. Examples of the refined cellulosic powder include refined wood flour. The average particle size of such refined cellulosic powder is preferably 1 nm to 100 µm, more preferably 1 nm to 10 µm, and still more preferably 1 nm to 1 µm, from the viewpoint of increasing the strength of a molded article made from the resin composition of the present invention. The refined cellulosic powder is preferably that obtained by microfibrillating (MF-treating) the unrefined cellulosic powder (MF-treated cellulosic powder) from the viewpoint of increasing the strength of a molded article made from the resin composition of the present invention. Furthermore, in the MF-treated cellulosic powder, not all of the unrefined cellulosic powder need to be uniformly MF-treated. For example, cellulosic powder in which a part of the surface of an unrefined cellulosic powder is MF-treated (partially MF-treated cellulosic powder) can also be suitably used as the cellulosic substance (A) in the present invention.

The pulp is not particularly limited as long as it can be used for fiber-reinforced plastics, and may be wood pulp or non-wood pulp. Such pulp may be refined (defibrated) or unrefined (undefibrated), but refined (defibrated) pulp is preferable from the viewpoint of increasing the strength of a molded article made from the resin composition of the present invention. The refined (defibrated) pulp may be one that has been refined (defibrated) in advance, or may be one obtained by refining (defibrating) unrefined (undefibrated) pulp when producing the resin composition of the present invention.

Examples of the wood pulp include those derived from softwood (N-wood) and those derived from hardwood (L-wood). Examples of the non-wood pulp include those derived from seed fibers, bast fibers, leaf vein fibers (vascular fibers), fruit fibers, and stem fibers (lignocellulosic fibers). Examples of seed fibers include cotton, kapok, and bombax ceiba. Examples of bast fibers include ramie, flax, jute, hemp, paper mulberry, mitsumata, gampi, kenaf, and mulberry. Examples of leaf fibers include sisal hemp, manila hemp, pineapple, New Zealand flax, sansevieria, banana, and agave hemp. Examples of fruit fibers include coconut coir and oil palm coir. Examples of stem fibers include sugarcane bagasse, bamboo, rice straw, wheat straw, reed, windmill palm, Napier grass (elephant grass), switchgrass, Miscanthus (susuki grass), and Erianthus.

The pulp may be chemical pulp (CP) or mechanical pulp (MP). Examples of chemical pulp include kraft pulp (KP), sulfide pulp (SP), and alkaline pulp (AP). Examples of mechanical pulp include ground pulp (GP), refiner ground pulp (RGP), thermomechanical pulp (TMP), and chemithermomechanical pulp (CTMP). Furthermore, the pulp may be bleached pulp (BP) bleached with chemicals or the like, or unbleached pulp (UP).

Specific examples of the wood pulp include softwood bleached chemical pulp (NBCP) such as softwood bleached kraft pulp (NBKP), softwood unbleached chemical pulp (NUCP) such as softwood unbleached kraft pulp (NUKP), hardwood bleached chemical pulp (LBCP) such as hardwood bleached kraft pulp (LBKP), and hardwood unbleached chemical pulp (LUCP) such as hardwood unbleached kraft pulp (LUKP), but are not limited thereto.

Furthermore, the pulp may be dry pulp or never-dried pulp. The never-dried pulp is pulp that has no drying history and is maintained in a wet state, and is not particularly limited, but examples thereof include unbleached one (for example, never-dried pulp in NUCP such as NUKP or LUCP such as LUKP) obtained in the production process of the pulp, etc., by digesting raw material chips with chemicals to separate the chip fibers, then washing the separated fibers to remove lignin, foreign matter, etc., and further decomposing the remaining lignin with oxygen, and one that has been further bleached with chemicals, etc. (for example, never-dried pulp in NBCP such as NBKP or LBCP such as LBKP).

The cellulosic substance (A) used in the present invention may be one containing lignin (lignocellulosic substance) or one not containing lignin. Examples of the lignocellulosic substance include refined lignocellulosic fibers, unrefined lignocellulosic fibers, refined lignocellulosic powder, and unrefined lignocellulosic powder.

Furthermore, the cellulosic substance (A) used in the present invention may be a chemically modified one (chemically modified cellulosic substance) or an unmodified one. Here, chemical modification means that hydroxyl groups in sugar chains and/or lignin constituting the surface of the cellulosic substance are esterified with a carboxylic acid, half-esterified (monoesterified with a carboxylic anhydride), or etherified with an alkyl group which is optionally substituted.

Examples of the chemically modified cellulosic substance include chemically modified refined cellulosic fibers, chemically modified unrefined cellulosic fibers, chemically modified refined cellulosic powder, and chemically modified unrefined cellulosic powder, and among these, those in which hydroxyl groups in sugar chains and/or lignin constituting the surface of the cellulosic substance are esterified with an aliphatic carboxylic acid or an alkyl or alkenyl succinic anhydride are preferable. These chemically modified cellulosic substances may be those containing lignin (chemically modified lignocellulosic substances) or those not containing lignin.

The chemically modified cellulosic substance is preferably fibrous from the viewpoint of handleability of chemical modification, and specifically, chemically modified refined cellulosic fibers and chemically modified unrefined cellulosic fibers are preferable, chemically modified refined cellulosic fibers are more preferable, and those in which hydroxyl groups in sugar chains and/or lignin constituting the surface of refined cellulosic fibers are esterified with an aliphatic carboxylic acid or an alkyl or alkenyl succinic anhydride are still more preferable. The chemically modified refined cellulosic fibers and the chemically modified unrefined cellulosic fibers may be those containing lignin (chemically modified refined lignocellulosic fibers and chemically modified unrefined lignocellulosic fibers) or those not containing lignin.

In the present invention, one of these cellulosic substances (A) may be used alone, or two or more thereof may be used in combination.

### (B) Polyvinyl Acetate Polymer Emulsion

The polyvinyl acetate polymer emulsion (B) used in the present invention is an emulsion of a polyvinyl acetate polymer, that is, a homopolymer of vinyl acetate, and contains polyvinyl alcohol as a dispersant. By using such a polyvinyl acetate polymer emulsion (B), it becomes possible to highly disperse the cellulosic substance (A) in the thermoplastic resin (C). When preparing the mixture (α) containing the cellulosic substance (A), the polyamine (D), and the carboxylic acid (E), by using the polyvinyl acetate polymer emulsion (B), it becomes possible to uniformly mix the cellulosic substance (A), the polyamine (D), and the carboxylic acid (E) without using a solvent for dissolving the carboxylic acid (E) (for example, a solvent having a hydrophilic group and a hydrophobic group such as tripropylene glycol).

Such a polyvinyl acetate polymer emulsion (B) is not particularly limited, and for example, a vinyl acetate resin emulsion-based adhesive commercially available as wood glue can be used.

### (C) Thermoplastic Resin

The thermoplastic resin (C) used in the present invention is not particularly limited, but examples thereof include polyolefins, polyamides, aliphatic polyesters, aromatic polyesters, polyacetals, polycarbonates, polystyrenes, acrylonitrile-butadiene-styrene copolymers (ABS resins), polycarbonate-ABS alloys (PC-ABS alloys), cellulosic resins, polylactic acid (PLA), polyhydroxybutyrate (PHBT), polyhydroxyhexanoate (PHAT), a copolymer of polyhydroxybutyrate and polyhydroxyhexanoate (PHBH), polybutylene succinate (PBS), modified polyphenylene ether (m-PPE), and polyvinyl chloride.

Among these thermoplastic resins, polyolefins, polyamides, aliphatic polyesters, aromatic polyesters, polyacetals, polycarbonates, polystyrenes, acrylonitrile-butadiene-styrene copolymers (ABS resins), polycarbonate-ABS alloys (PC-ABS alloys), cellulosic resins, polylactic acid (PLA), polyhydroxybutyrate (PHBT), polyhydroxyhexanoate (PHAT), a copolymer of polyhydroxybutyrate and polyhydroxyhexanoate (PHBH), polybutylene succinate (PBS), and modified polyphenylene ether (m-PPE) are preferable from the viewpoints of thermal stability, strength characteristics, and the like, and biomass-derived polyethylene, biomass-derived polypropylene, a copolymer of biomass-derived ethylene and biomass-derived propylene, a copolymer of at least one of biomass-derived ethylene and biomass-derived propylene with a petrochemical-derived olefin, polylactic acid (PLA), polyhydroxybutyrate (PHBT), polyhydroxyhexanoate (PHAT), a copolymer of polyhydroxybutyrate and polyhydroxyhexanoate (PHBH), and polybutylene succinate (PBS) are more preferable from the viewpoints of environmental conservation, thermal stability, strength characteristics, and weight reduction of molded articles.

In the present invention, one of these thermoplastic resins (C) may be used alone, or two or more thereof may be used in combination.

### (D) Polyamine

Examples of the polyamine (D) used in the present invention include aliphatic polyamines and aromatic polyamines.

Examples of the aliphatic polyamine include polyethyleneimine (sometimes referred to as "polyaziridine"), poly(trimethyleneimine) [repeating unit: -NHCH₂CH₂CH₂-], poly(aminomethylethylene) [repeating unit: - CH₂CH(CH₂NH₂)-], poly (aminoethylene) [repeating unit: - CH₂CH(NH₂)-], and poly (meth) acrylic acid aminoalkylene amide (a polymer in which the carboxylic acid of polyacrylic acid or polymethacrylic acid forms an amide bond with one amino group of an alkylenediamine), and among these, polyethyleneimine is preferable.

The polyethyleneimine may be of any shape, such as linear (containing all secondary amino groups), branched (containing primary, secondary, and tertiary amino groups), and fully branched dendrimer-like, but branched polyethyleneimine is preferable. As the branched polyethyleneimine, for example, those commercially available under the trade name of EPOMIN (R) can be used. The number average molecular weight (Mn) of the polyethyleneimine is preferably 300 to 100,000, and more preferably 300 to 70,000.

As the aromatic polyamine, 4,4'-diaminodiphenylmethane, 4,4'-diaminodiphenyl ether, 3,4'-diaminodiphenyl ether, 1,3-bis(4-aminophenoxy)benzene, resorcinol bis(4-aminophenyl) ether (CAS No.: 2479-46-1), 1,4-bis(4-aminophenoxy)benzene (CAS No.: 3491-12-1), 4,4'-bis(4-aminophenoxy)biphenyl (CAS No.: 13080-85-8), 2,2-bis[4-(4-aminophenoxy)phenyl]propane (CAS No.: 13080-86-9), bis(4-aminophenyl) sulfone (CAS No.: 80-08-0), and 2,2'-dimethylbiphenyl-4,4'-diamine (CAS No.: 84-67-3) are preferable.

In the present invention, one of these polyamines (D) may be used alone, or two or more thereof may be used in combination.

### (E) Carboxylic Acid

The carboxylic acid (E) used in the present invention is not particularly limited as long as it is a carboxylic acid capable of imparting hydrophobicity to the cellulosic substance (A), and examples thereof include carboxylic acids having a hydrophobic group, and examples of the hydrophobic group include a hydrophobic hydrocarbon group. Examples of the carboxylic acid include monocarboxylic acids, polycarboxylic acids such as dicarboxylic acids, tricarboxylic acids, and tetracarboxylic acids, and their acid anhydrides.

Examples of the carboxylic acid (E) include aliphatic, alicyclic, and aromatic carboxylic acids represented by the following formula (1):

R-(COOH)ₙ (1)

(in the formula, R represents a hydrophobic group, and n represents the number of carboxyl groups in one molecule and is an integer of 1 or 2 or more.)

In the formula (1), R is a hydrophobic group (for example, a hydrophobic hydrocarbon group), and examples thereof include an alkyl group, an alkenyl group, an alicyclic hydrocarbon group, an oxyalkyl group to which an alicyclic hydrocarbon group is bonded, or a phenoxyalkyl group. The phenyl group of the phenoxyalkyl group may be bonded to an alkyl group or an alicyclic hydrocarbon group. The alkyl group (including the alkyl group bonded to the phenyl group of the phenoxyalkyl group) and the alkenyl group may have a branched chain. Furthermore, a plurality of the alicyclic hydrocarbon groups (including the alicyclic hydrocarbon group bonded to the oxyalkyl group and the alicyclic hydrocarbon group bonded to the phenyl group of the phenoxyalkyl group) may be crosslinked or condensed.

The alkyl group which may have a branched chain is preferably an alkyl group having 1 to 17 carbon atoms (for example, methyl group, ethyl group, iso-butyl group, t-butyl group, n-undecyl group, n-tridecyl group, n-pentadecyl group, n-heptadecyl group), more preferably an alkyl group having 1 to 12 carbon atoms (for example, methyl group, ethyl group, iso-butyl group, t-butyl group, n-undecyl group), and still more preferably an alkyl group having 1 to 5 carbon atoms (for example, methyl group, ethyl group, iso-butyl group, t-butyl group) from the viewpoint of further improving the mechanical strength of the molded article.

The alkenyl group which may have a branched chain is preferably an alkenyl group having 2 to 17 carbon atoms, more preferably an alkenyl group having 2 to 12 carbon atoms, and still more preferably an alkenyl group having 2 to 5 carbon atoms from the viewpoint of further improving the mechanical strength of the molded article.

Examples of the alicyclic hydrocarbon group, of which a plurality may be crosslinked or condensed, include adamantyl group, cyclohexyl group, and 4-(t-butyl)cyclohexyl group, and adamantyl group is preferable from the viewpoint of further improving the mechanical strength of the molded article.

Examples of the oxyalkyl group to which an alicyclic hydrocarbon group is bonded include bornyloxymethyl group, isobornyloxymethyl group, and menthyloxymethyl group.

Examples of the phenoxyalkyl group to which an alkyl group or an alicyclic hydrocarbon group may be bonded include phenoxymethyl group, 4-(t-butyl)phenoxymethyl group, 4-(1,1,3,3-tetramethyl)butylphenoxymethyl group, adamantylphenoxymethyl group, bornylphenoxymethyl group, bornylphenoxypentyl group, and menthylphenoxymethyl group, and 4-(t-butyl)phenoxymethyl group, 4-(1,1,3,3-tetramethyl)butylphenoxymethyl group, adamantylphenoxymethyl group, bornylphenoxymethyl group, and menthylphenoxymethyl group are preferable from the viewpoint of further improving the mechanical strength of the molded article.

Examples of the monocarboxylic acid used in the present invention include aliphatic monocarboxylic acids such as propionic acid, butyric acid, valeric acid, caproic acid, heptanoic acid, caprylic acid, nonanoic acid, capric acid, lauric acid, myristic acid, palmitic acid, stearic acid, acrylic acid, oleic acid, linoleic acid, and linolenic acid, and aromatic monocarboxylic acids such as benzoic acid and salicylic acid.

Examples of the polycarboxylic acid used in the present invention include aliphatic polycarboxylic acids having 2 to 3 carboxyl groups in the molecule, and aromatic polycarboxylic acids having 2 to 4 (preferably 3 to 4) carboxyl groups in the molecule.

Examples of the aliphatic polycarboxylic acid include aliphatic polycarboxylic acids having a linear hydrocarbon group with 1 to 10 carbon atoms, and specific examples include malonic acid, succinic acid, glutaric acid, adipic acid, azelaic acid, sebacic acid, eicosanedioic acid, itaconic acid, fumaric acid, and maleic acid.

Examples of the aliphatic polycarboxylic acid also include aliphatic polycarboxylic acids having a branched hydrocarbon group. Examples of such aliphatic polycarboxylic acids having a branched hydrocarbon group include alkylsuccinic acids, alkenylsuccinic acids, alkyldodecanedioic acids, and alkenyldodecanedioic acids. The number of carbon atoms of the alkyl group which is a branched chain in an alkylsuccinic acid and the alkenyl group which is a branched chain in an alkenylsuccinic acid is preferably 4 to 17.

Specific examples of alkylsuccinic acid include octylsuccinic acid, dodecylsuccinic acid, tridecylsuccinic acid, tetradecylsuccinic acid, hexadecylsuccinic acid, and octadecylsuccinic acid. Specific examples of alkenylsuccinic acid include pentenylsuccinic acid, hexenylsuccinic acid, octenylsuccinic acid, decenylsuccinic acid, undecenylsuccinic acid, dodecenylsuccinic acid, tridecenylsuccinic acid, tetradecenylsuccinic acid, hexadecenylsuccinic acid, octadecenylsuccinic acid, and iso-octadecenylsuccinic acid.

Examples of the aromatic polycarboxylic acid include phthalic acid [1,2-benzenedicarboxylic acid], isophthalic acid [1,3-benzenedicarboxylic acid], terephthalic acid [1,4-benzenedicarboxylic acid], pyromellitic acid [1,2,4,5-benzenetetracarboxylic acid], trimellitic acid [1,2,4-benzenetricarboxylic acid], and trimesic acid [1,3,5-benzenetricarboxylic acid].

In the present invention, a rosin acid can also be used as the carboxylic acid (E). Examples of the rosin acid include rosin acids such as abietic acid, neoabietic acid, palustric acid, pimaric acid, isopimaric acid, and dehydroabietic acid, and derivatives of these rosin acids. Examples of the derivative of the rosin acid include condensates of the rosin acid, acrylic acid-modified products of the rosin acid, fumaric acid-modified products of the rosin acid, maleic anhydride-modified products of the rosin acid, phenol-modified products of the rosin acid, and rosin acid-modified phenol resins. Among these rosin acids, the rosin acids, the maleic anhydride-modified products of the rosin acid, and the rosin acid-modified phenol resins are preferable, and the abietic acid, the dehydroabietic acid, maleic anhydride-modified products of the abietic acid, and abietic acid-modified phenol resins are more preferable, from the viewpoint of further improving the mechanical strength of the molded article.

In the present invention, one of these carboxylic acids (E) may be used alone, or two or more thereof may be used in combination.

### (F) Acid Anhydride-Modified Polyolefin

The resin composition of the present invention may contain an acid anhydride-modified polyolefin (F). Examples of such acid anhydride-modified polyolefin (F) include maleic anhydride-modified polyolefins (that is, those in which maleic anhydride is grafted into the polyolefin molecule and/or at the molecular terminals, or copolymers of maleic anhydride and an olefin) and their hydrolysates (that is, those in which the acid anhydride groups in the maleic anhydride-modified polyolefins are hydrolyzed). By using such acid anhydride-modified polyolefin (F), it becomes possible to more highly disperse the cellulosic substance (A) in the thermoplastic resin (C), and a molded article with even more excellent mechanical strength can be obtained.

Examples of the maleic anhydride-modified polyolefin and its hydrolysate include those obtained by modifying polymers and/or copolymers of alkenes having 2 to 6 carbon atoms with maleic anhydride, copolymers of maleic anhydride and alkenes having 2 to 6 carbon atoms, and those in which their acid anhydride groups have been hydrolyzed; among these, those obtained by modifying polymers and/or copolymers of alkenes having 2 to 6 carbon atoms with maleic anhydride and those in which their acid anhydride groups have been hydrolyzed are preferable; specific examples include maleic anhydride-modified polyethylene (abbreviation: MAPE), maleic anhydride-modified polypropylene (abbreviation: MAPP), maleic anhydride-modified ethylene-propylene copolymer, maleic anhydride-modified polybutene, maleic anhydride-modified polypentene, and maleic anhydride-modified polyhexene, and those in which these acid anhydride groups have been hydrolyzed; MAPE, MAPP, and their hydrolysates are more preferable.

The average molecular weight (Mw) of the maleic anhydride-modified polyolefin (especially, maleic anhydride-modified polypropylene) is preferably 9,000 to 100,000, more preferably 9,000 to 70,000, and still more preferably 9,000 to 50,000. Maleic anhydride-modified polypropylene having an average molecular weight (Mw) of 9,000 to 70,000 (preferably 9,000 to 50,000) in which maleic anhydride is grafted onto polypropylene fragments obtained by thermally decomposing polypropylene with a large molecular weight can also be used as the acid anhydride-modified polyolefin.

The acid loading (acid value) of the maleic anhydride-modified polyolefin (especially, maleic anhydride-modified polypropylene) is preferably 1.4 to 120 mgKOH/g, and more preferably 3.5 to 60 mgKOH/g.

In the present invention, one of these acid anhydride-modified polyolefins (F) may be used alone, or two or more thereof may be used in combination.

### (Resin Composition)

The resin composition of the present invention is a melt-kneaded product of a mixture (α) comprising the cellulosic substance (A) and the polyvinyl acetate polymer emulsion (B) containing polyvinyl alcohol as a dispersant, and the thermoplastic resin (C). By using such a resin composition, a molded article with excellent mechanical strength can be obtained.

In the resin composition of the present invention, the content of the cellulosic substance (A) is preferably 0.1 to 79.9% by mass, more preferably 0.5 to 49.5% by mass, and still more preferably 1 to 20% by mass, with respect to the entire resulting resin composition. If the content of the cellulosic substance (A) is less than the lower limit, there is a tendency that it becomes difficult to obtain a molded article excellent in mechanical strength, linear expansion coefficient (CTE), heat resistance (for example, heat distortion temperature), and the like; on the other hand, if it exceeds the upper limit, there is a tendency for a decrease in the surface smoothness of the molded article, a decrease in transparency, a decrease in the flowability of the molten resin composition, distortion of the molded article, poor adhesion, and the like to occur.

The content of the polyvinyl acetate polymer emulsion (B) is preferably 0.1 to 15% by mass, more preferably 0.5 to 12% by mass, and still more preferably 1 to 10% by mass, in terms of polyvinyl acetate polymer, with respect to the entire resulting resin composition. If the content of the polyvinyl acetate polymer emulsion (B) is less than the lower limit, there is a tendency that hydrophobicity is not sufficiently imparted to the cellulosic substance (A), the cellulosic substance (A) cannot be highly dispersed in the thermoplastic resin (C), and it becomes difficult to obtain a molded article with excellent mechanical strength; on the other hand, if it exceeds the upper limit, there is a tendency for excess polyvinyl acetate polymer emulsion (B) to loosen the interface or overflow into the thermoplastic resin (C), thereby degrading the physical properties of the resin composition and its molded article.

The content of the thermoplastic resin (C) is preferably 20 to 99.8% by mass, more preferably 50 to 99% by mass, and still more preferably 70 to 98% by mass, with respect to the entire resulting resin composition. If the content of the thermoplastic resin (C) is less than the lower limit, there is a tendency for molding defects, and breakage/damage during use due to a decrease in impact resistance to occur; on the other hand, if it exceeds the upper limit, the amount of the cellulosic substance (A) becomes relatively small, and there is a tendency that it becomes difficult to obtain a molded article excellent in various physical properties such as mechanical strength.

In the resin composition of the present invention, it is preferable that the mixture (α) further comprises the polyamine (D). By using such a resin composition, a molded article with even more excellent mechanical strength can be obtained. In this case, the content of the polyamine (D) is preferably 0.1 to 70 parts by mass, more preferably 0.1 to 50 parts by mass, and still more preferably 0.1 to 30 parts by mass, with respect to 100 parts by mass of the cellulosic substance (A). If the proportion of the polyamine (D) is less than the lower limit, there is a tendency that hydrophobicity is not sufficiently imparted to the cellulosic substance (A), the cellulosic substance (A) cannot be highly dispersed in the thermoplastic resin (C), and it becomes difficult to obtain a molded article with excellent mechanical strength; on the other hand, if it exceeds the upper limit, there is a tendency for recovery of excess polyamines and the like to become necessary.

Furthermore, in the resin composition of the present invention, it is more preferable that the mixture (α) further comprises the polyamine (D) and the carboxylic acid (E). It is also more preferable that the resin composition of the present invention is a melt-kneaded product of a mixture (α) further comprising the polyamine (D) and a melt-kneaded product (β) comprising the thermoplastic resin (C) and the carboxylic acid (E). By using these resin compositions, a molded article with particularly excellent mechanical strength can be obtained. In this case, the ratio of the acid value of the carboxylic acid (E) and the amine value of the polyamine (D) (acid value/amine value) is preferably 0.01 to 2.0, and more preferably 0.1 to 1.0 (equivalent). If the ratio (acid value/amine value) is less than the lower limit, there is a tendency that hydrophobicity is not sufficiently imparted to the cellulosic substance (A), the cellulosic substance (A) cannot be highly dispersed in the thermoplastic resin (C), and it becomes difficult to obtain a molded article with excellent mechanical strength; on the other hand, if it exceeds the upper limit, there is a tendency for metal corrosion and the like associated with the acidity of excess carboxylic acids to occur.

In the resin composition of the present invention, when the acid anhydride-modified polyolefin (F) is included, the ratio of the sum of the acid values of the carboxylic acid (E) and the acid anhydride-modified polyolefin (F) and the amine value of the polyamine (D) (sum of acid values/amine value) is preferably 0.01 to 2.0, and more preferably 0.1 to 1.0 (equivalent).

### (Additive)

In the present invention, a filler (G) and/or a compatibilizer (H) can be used as an additive. This improves the dispersibility of the cellulosic substance (A) in the thermoplastic resin (C).

### (G) Filler

Examples of the filler (G) include talc, clay, zeolite, aluminum oxide, calcium carbonate, titanium oxide, silica, magnesium oxide, and mica, and among these, talc, clay, zeolite, and calcium carbonate are preferable. One of these fillers (G) may be used alone, or two or more thereof may be used in combination. By including such a filler (G), the cellulosic substance (A) in the resin composition becomes easier to defibrillate during melt-kneading, and the dispersibility of the cellulosic substance (A) is improved.

When the filler (G) is included in the resin composition of the present invention, its content is preferably 1 to 40 parts by mass, more preferably 2 to 20 parts by mass, and still more preferably 5 to 10 parts by mass, with respect to 100 parts by mass of the thermoplastic resin (C).

### (H) Compatibilizer

The compatibilizer (H) is not particularly limited as long as it is a substance that has affinity for both the cellulosic substance (A) and the thermoplastic resin (C) and improves the dispersibility of the cellulosic substance (A) in the thermoplastic resin (C); examples include modified polyolefins (excluding those corresponding to the acid anhydride-modified polyolefin (F)), graft products of a polyolefin and another polymer (excluding those corresponding to the acid anhydride-modified polyolefin (F)), and graft products of an acrylic polymer chain having affinity for a polyolefin and an acrylic polymer chain having affinity for a cellulose. One of these compatibilizers (H) may be used alone, or two or more thereof may be used in combination.

Examples of the graft product of a polyolefin and another polymer include copolymers of a polyolefin such as polyethylene, polypropylene, or polybutene, and polyvinyl acetate (PVAc), poly(meth)acrylic acid, or a poly(meth)acrylate.

Examples of the graft products of an acrylic polymer chain having affinity for a polyolefin and an acrylic polymer chain having affinity for a cellulose include the block copolymer described in the specification of Japanese Patent No. 6234037, which has a resin-compatible segment and a cellulose-compatible segment.

When the compatibilizer (H) is included in the resin composition of the present invention, its content is preferably 1 to 20 parts by mass, more preferably 2 to 10 parts by mass, and still more preferably 5 to 10 parts by mass, with respect to 100 parts by mass of the thermoplastic resin (C).

### (Other Additives)

Furthermore, the resin composition of the present invention may contain various additives such as an antioxidant, a surfactant, a plasticizer, an antistatic agent, an ultraviolet absorber, a colorant, and a deodorant, to the extent that the effects of the present invention are not impaired.

### [Method for Producing Resin Composition]

Next, the method for producing the resin composition of the present invention will be described. The method for producing the resin composition of the present invention is a method (Method 1) comprising a step of mixing the cellulosic substance (A) and the polyvinyl acetate polymer emulsion (B) to prepare a mixture (α) [mixture (α) preparation step], and a step of melt-kneading the mixture (α) and the thermoplastic resin (C) [melt-kneading step]. This method allows the cellulosic substance (A) to be highly dispersed in the thermoplastic resin (C), and furthermore, the cellulosic substance (A) can be refined (for example, defibrated) as necessary, yielding a resin composition capable of forming a molded article with excellent mechanical strength.

In the mixture (α) preparation step, it is preferable to further mix the polyamine (D) into the mixture (α) (Method 2), and it is more preferable to further mix the carboxylic acid (E) into the mixture (α) containing the polyamine (D) (Method 3).

In the method for producing the resin composition of the present invention, it is also more preferable to further mix the polyamine (D) into the mixture (α) in the mixture (α) preparation step, prepare a melt-kneaded product (β) by melt-kneading the thermoplastic resin (C) and the carboxylic acid (E) [melt-kneaded product (β) preparation step], and melt-knead the mixture (α) and the melt-kneaded product (β) [melt-kneading step] (Method 4).

That is, Methods 1 to 4 can be summarized as follows.

### (Method 1)

A method comprising:
a step of mixing the cellulosic substance (A) and the polyvinyl acetate polymer emulsion (B) to prepare a mixture (α) [mixture (α) preparation step]; and
a step of melt-kneading the mixture (α) and the thermoplastic resin (C) [melt-kneading step].

### (Method 2)

A method comprising:
a step of mixing the cellulosic substance (A), the polyvinyl acetate polymer emulsion (B), and the polyamine (D) to prepare a mixture (α) [mixture (α) preparation step]; and
a step of melt-kneading the mixture (α) and the thermoplastic resin (C) [melt-kneading step].

### (Method 3)

A method comprising:
a step of mixing the cellulosic substance (A), the polyvinyl acetate polymer emulsion (B), the polyamine (D), and the carboxylic acid (E) to prepare a mixture (α) [mixture (α) preparation step]; and
a step of melt-kneading the mixture (α) and the thermoplastic resin (C) [melt-kneading step].

### (Method 4)

A method comprising:
a step of mixing the cellulosic substance (A), the polyvinyl acetate polymer emulsion (B), and the polyamine (D) to prepare a mixture (α) [mixture (α) preparation step];
a step of melt-kneading the thermoplastic resin (C) and the carboxylic acid (E) to prepare a melt-kneaded product (β) [melt-kneaded product (β) preparation step]; and
a step of melt-kneading the mixture (α) and the thermoplastic resin (C) [melt-kneading step].

In the method for producing the resin composition of the present invention, the cellulosic substance (A), the polyvinyl acetate polymer emulsion (B), the thermoplastic resin (C), the polyamine (D), and the carboxylic acid (E) that can be used are those described in the section for the resin composition of the present invention. The blending amount of each component may be appropriately set such that the content of each component in the resulting resin composition is within a predetermined range.

### (Solvent)

In the method for producing the resin composition of the present invention, by using the polyvinyl acetate polymer emulsion (B), it is possible to uniformly mix the cellulosic substance (A), the polyamine (D), and the carboxylic acid (E) without using a solvent for dissolving the carboxylic acid (E) (for example, a solvent having a hydrophilic group and a hydrophobic group such as tripropylene glycol); therefore, adhesion of dirt in the production line (especially, the exhaust line) during melt-kneading and contamination of the resin composition by residual solvent or solvent containing unreacted components, etc., are suppressed, and VOC emissions are also suppressed. However, a solvent having a hydrophilic group and a hydrophobic group, such as tripropylene glycol, may be used as long as it is within a range where adhesion of dirt in the production line (especially, the exhaust line) during melt-kneading and contamination of the resin composition by residual solvent or solvent containing unreacted components, etc., are suppressed, and VOC emissions are also suppressed.

### [Mixture (α) Preparation Step]

In the mixture (α) preparation step, the cellulosic substance (A) and the polyvinyl acetate polymer emulsion (B) are mixed to prepare the mixture (α). The mixture (α) contains the cellulosic substance (A) to whose surface the polyvinyl acetate polymer emulsion (B) (preferably, granular polyvinyl acetate polymer whose surface is shielded by polyvinyl alcohol) is adhered. This polyvinyl acetate polymer emulsion (B) (the granular polyvinyl acetate polymer) forms a polyvinyl acetate polymer composition layer containing polyvinyl alcohol in the melt-kneading step described later, thereby imparting hydrophobicity to the surface of the cellulosic substance (A). The cellulosic substance (A) to whose surface hydrophobicity has been imparted is highly dispersed in the thermoplastic resin (C); therefore, a molded article made from the resulting resin composition has excellent mechanical strength.

In the mixture (α) preparation step, it is preferable to further mix the polyamine (D). This causes the polyvinyl acetate polymer emulsion (B) (preferably, granular polyvinyl acetate polymer whose surface is shielded by polyvinyl alcohol) to adhere to the surface of the cellulosic substance (A) via the polyamine (D). This polyvinyl acetate polymer emulsion (B) (the granular polyvinyl acetate polymer) forms a polyvinyl acetate polymer composition layer containing polyvinyl alcohol in the melt-kneading step described later, and the polyvinyl acetate polymer composition layer strongly adheres to the surface of the cellulosic substance (A) via the polyamine (D) layer; therefore, a resin composition capable of forming a molded article with even more excellent mechanical strength is obtained. Examples of the method for further mixing the polyamine (D) include a method of simultaneously mixing the cellulosic substance (A), the polyvinyl acetate polymer emulsion (B), and the polyamine (D); a method of mixing the cellulosic substance (A) and the polyamine (D), and then further mixing the polyvinyl acetate polymer emulsion (B); and a method of mixing the cellulosic substance (A) and the polyvinyl acetate polymer emulsion (B), and then further mixing the polyamine (D).

Furthermore, when the polyamine (D) is further mixed in the mixture (α) preparation step, it is more preferable to further mix the carboxylic acid (E) in this mixture (α) preparation step and to melt-knead this mixture (α) (containing the polyamine (D) and the carboxylic acid (E)) and the thermoplastic resin (C); it is also more preferable, as described later, to prepare a melt-kneaded product (β) by melt-kneading the thermoplastic resin (C) and the carboxylic acid (E), and to melt-knead this melt-kneaded product (β) and the mixture (α) (containing the polyamine (D)). Through these methods, the polyvinyl acetate polymer emulsion (B) (preferably, granular polyvinyl acetate polymer whose surface is shielded by polyvinyl alcohol) adheres to the surface of the cellulosic substance (A) via the reaction product of the polyamine (D) and the carboxylic acid (E). This polyvinyl acetate polymer emulsion (B) (the granular polyvinyl acetate polymer) forms a polyvinyl acetate polymer composition layer containing polyvinyl alcohol in the melt-kneading step described later, and the polyvinyl acetate polymer composition layer adheres even more strongly to the surface of the cellulosic substance (A) via the polyamine (D) layer; therefore, a resin composition capable of forming a molded article with particularly excellent mechanical strength is obtained.

Examples of the method for further mixing the polyamine (D) and the carboxylic acid (E) in the mixture (α) preparation step include a method of simultaneously mixing the cellulosic substance (A), the polyvinyl acetate polymer emulsion (B), the polyamine (D), and the carboxylic acid (E); a method of mixing the cellulosic substance (A), the polyamine (D), and the carboxylic acid (E), and then mixing the polyvinyl acetate polymer emulsion (B); a method of mixing the cellulosic substance (A) and the polyamine (D), then mixing the carboxylic acid (E), and further mixing the polyvinyl acetate polymer emulsion (B); and a method of mixing the cellulosic substance (A) and the carboxylic acid (E), then mixing the polyamine (D), and further mixing the polyvinyl acetate polymer emulsion (B).

When using an unrefined cellulosic substance such as pulp or wood flour as the raw material cellulosic substance (A), the cellulosic substance (A) in the mixture prepared in the mixture preparation step may be subjected to a refining treatment (for example, a defibrating treatment) as necessary in this mixture (α) preparation step.

The acid anhydride-modified polyolefin (F), the filler (G), the compatibilizer (H), and the other additive may be mixed in this mixture (α) preparation step. In the method for producing the resin composition of the present invention, the acid anhydride-modified polyolefin (F), filler (G), compatibilizer (H), and the other additive that can be used are those described in the section for the resin composition of the present invention.

The method for mixing each component in such a mixture (α) preparation step is not particularly limited, but examples include stirring with a stirring device such as a planetary mixer, and kneading with a kneading device such as an extruder. Among these mixing methods, when kneading with a kneading device such as an extruder is performed, it is possible to continuously carry out the mixture preparation step and the melt-kneading step. When an unrefined cellulosic substance (pulp (especially, never-dried pulp), wood, etc.) is used as the raw material cellulosic substance (A), the cellulosic substance (A) can be refined (defibrated) by kneading with a kneading device such as an extruder.

### [Melt-Kneaded Product (β) Preparation Step]

When the polyamine (D) are further mixed in the mixture (α) preparation step, it is also more preferable to prepare a melt-kneaded product (β) by melt-kneading the thermoplastic resin (C) and the carboxylic acid (E). This causes the polyvinyl acetate polymer emulsion (B) (preferably, granular polyvinyl acetate polymer whose surface is shielded by polyvinyl alcohol) to adhere to the surface of the cellulosic substance (A) via the reaction product of the polyamine (D) and the carboxylic acid (E). This polyvinyl acetate polymer emulsion (B) (the granular polyvinyl acetate polymer) forms a polyvinyl acetate polymer composition layer containing polyvinyl alcohol in the melt-kneading step described later, and the polyvinyl acetate polymer composition layer adheres even more strongly to the surface of the cellulosic substance (A) via the polyamine (D) layer; therefore, a resin composition capable of forming a molded article with particularly excellent mechanical strength is obtained.

The method for melt-kneading each component in such a melt-kneaded product (β) preparation step is not particularly limited, but examples include melt-kneading with a kneading device such as an extruder. The temperature during melt-kneading is preferably a temperature in the range of the softening point or higher and the melting point +20°C or lower of the thermoplastic resin (C), and more preferably a temperature in the range of the melting point or higher and the melting point +10°C or lower of the thermoplastic resin (C).

### [Melt-Kneading Step]

The melt-kneading step is a step of melt-kneading the mixture (α) and the thermoplastic resin (C). Specifically, it is a step of melt-kneading the mixture (α) of the cellulosic substance (A) and the polyvinyl acetate polymer emulsion (B) with the thermoplastic resin (C); a step of melt-kneading the mixture (α) of the cellulosic substance (A), the polyvinyl acetate polymer emulsion (B), and the polyamine (D) with the thermoplastic resin (C); or a step of melt-kneading the mixture (α) of the cellulosic substance (A), the polyvinyl acetate polymer emulsion (B), the polyamine (D), and the carboxylic acid (E) with the thermoplastic resin (C).

In the resin composition (melt-kneaded product) obtained in these steps, the polyvinyl acetate polymer emulsion (B) (preferably, granular polyvinyl acetate polymer whose surface is shielded by polyvinyl alcohol) is adhered to the surface (preferably adhered via the polyamine (D) layer, more preferably adhered via the reaction product layer of the polyamine (D) and the carboxylic acid (E)), and the hydrophobicity-imparted cellulosic substance (A) is highly dispersed in the thermoplastic resin (C). This polyvinyl acetate polymer emulsion (B) (the granular polyvinyl acetate polymer) adhered to the surface of the cellulosic substance (A) forms a polyvinyl acetate polymer composition layer containing polyvinyl alcohol by further continuing the melt-kneading; therefore, hydrophobicity is imparted to the surface of the cellulosic substance (A). The cellulosic substance (A) to whose surface hydrophobicity has been imparted is highly dispersed in the thermoplastic resin (C); therefore, a molded article made from the resin composition has excellent mechanical strength. From the viewpoint that the polyvinyl acetate polymer composition layer adheres even more strongly to the surface of the cellulosic substance (A), and a resin composition capable of forming a molded article with even more excellent mechanical strength is obtained, it is preferable that the polyvinyl acetate polymer composition layer is adhered to the surface of the cellulosic substance (A) via the polyamine (D) layer, and it is more preferable that it is adhered via the reaction product layer of the polyamine (D) and the carboxylic acid (E).

In this melt-kneading step, the mixture (α) of the cellulosic substance (A), the polyvinyl acetate polymer emulsion (B), and the polyamine (D) may be melt-kneaded with the melt-kneaded product (β) of the thermoplastic resin (C) and the carboxylic acid (E). This causes the polyamine (D) and the carboxylic acid (E) to react, and the polyvinyl acetate polymer emulsion (B) (preferably, granular polyvinyl acetate polymer whose surface is shielded by polyvinyl alcohol) adheres to the surface of the cellulosic substance (A) via the reaction product. This polyvinyl acetate polymer emulsion (B) (the granular polyvinyl acetate polymer) forms a polyvinyl acetate polymer composition layer containing polyvinyl alcohol by further continuing the melt-kneading, and the polyvinyl acetate polymer composition layer adheres even more strongly to the surface of the cellulosic substance (A) via the reaction product layer; therefore, a molded article made from the obtained resin composition has particularly excellent mechanical strength.

The method for melt-kneading each component in such a melt-kneading step is not particularly limited, but examples include kneading with a kneading device such as an extruder. At this time, melt-kneading is performed while removing or after removing water contained in the mixture (α). The temperature during melt-kneading is preferably a temperature in the range of the softening point or higher and the melting point +20°C or lower of the thermoplastic resin (C), and more preferably a temperature in the range of the melting point or higher and the melting point +10°C or lower of the thermoplastic resin (C).

The acid anhydride-modified polyolefin (F), the filler (G), the compatibilizer (H), and the other additive may be mixed in this melt-kneading step. In the method for producing the resin composition of the present invention, the acid anhydride-modified polyolefin (F), filler (G), compatibilizer (H), and the other additive that can be used are those described in the section for the resin composition of the present invention.

### [Molded Article]

Next, the molded article of the present invention will be described. The molded article of the present invention is made from the resin composition of the present invention. As described above, in the resin composition of the present invention, the cellulosic substance (A) is highly dispersed in the thermoplastic resin (C); therefore, the molded article of the present invention made from this resin composition has excellent mechanical strength.

The method for producing such a molded article of the present invention is not particularly limited, and for example, it can be produced by molding the resin composition of the present invention in pellet or powder form into a desired shape by various known molding methods such as compression molding, injection molding, extrusion molding, blow molding, and foam molding.

### [Examples]

Hereinafter, the present invention will be described more specifically based on Examples and Comparative Examples, but the present invention is not limited to the following Examples.

### (Example 1)

First, to MF-treated cellulose fibers ("Celish KY110N" manufactured by Daicel Miraizu Ltd., water content: 85%), a polyvinyl acetate polymer emulsion containing polyvinyl alcohol as a dispersant ("Cemedine 605, Vinyl Acetate Resin Emulsion Wood Adhesive" manufactured by Cemedine Co., Ltd., water content: 56-60%, polyvinyl acetate polymer content: 40-44%) was added such that the blending amounts in the resin composition would be as shown in Table 1, and the mixture was stirred and mixed for 1 hour using a planetary mixer to prepare a mixture (α). The amount of the polyvinyl acetate polymer emulsion added was determined such that the blending amount of the polyvinyl acetate polymer would be as shown in Table 1.

Next, to the obtained mixture (α), 1/4 of the amount of polypropylene (Japan Polypropylene Corporation "NOVATEC MA04A," melt index: 40) corresponding to its blending amount in the resin composition (blending amount shown in Table 1) was mixed; furthermore, 0.1 parts by mass of a phenol-based antioxidant (BASF "Irganox 1010") was added with respect to 100 parts by mass of the obtained mixture; the resulting mixture was then quantitatively fed into an extruder (L/D = 45) and melt-kneaded while removing water by drying to produce a pellet-shaped masterbatch.

Thereafter, to the obtained masterbatch, the remaining amount of polypropylene (Japan Polypropylene Corporation "NOVATEC MA04A," melt index: 40) was added; furthermore, 0.1 parts by mass of a phenol-based antioxidant (BASF "Irganox 1010") was added with respect to 100 parts by mass of the obtained mixture; the resulting mixture was then quantitatively fed into an extruder (L/D = 45) and melt-kneaded to produce a pellet-shaped resin composition.

### (Example 2)

First, a mixture (α) was prepared in the same manner as in Example 1, except that to MF-treated cellulose fibers ("Celish KY110N" manufactured by Daicel Miraizu Ltd., water content: 85%), polyethyleneimine (number average molecular weight 1800) dissolved in water, a polyvinyl acetate polymer emulsion containing polyvinyl alcohol as a dispersant ("Cemedine 605, Vinyl Acetate Resin Emulsion Wood Adhesive" manufactured by Cemedine Co., Ltd., water content: 56-60%, polyvinyl acetate polymer content: 40-44%), and calcium carbonate (SHIRAISHI KOGYO KAISHA, LTD. "viscoexcel-30") were added such that the blending amounts in the resin composition would be as shown in Table 1.

Dehydroabietic acid powder was powder-mixed with 1/4 of the amount of polypropylene (Japan Polypropylene Corporation "NOVATEC MA04A," melt index: 40) corresponding to its blending amount in the resin composition (blending amount shown in Table 1) such that its blending amount in the resin composition would be as shown in Table 1; furthermore, 0.1 parts by mass of a phenol-based antioxidant (BASF "Irganox 1010") was added with respect to 100 parts by mass of the obtained mixture; the resulting mixture was then melt-kneaded to prepare a melt-kneaded product (β).

Next, the mixture (α) and the melt-kneaded product (β) were mixed; furthermore, 0.1 parts by mass of a phenol-based antioxidant (BASF "Irganox 1010") was added with respect to 100 parts by mass of the solid content of the obtained mixture; the resulting mixture was then quantitatively fed into an extruder (L/D = 45) and melt-kneaded while removing water by drying to produce a pellet-shaped masterbatch.

Thereafter, to the obtained masterbatch, the remaining amount of polypropylene (Japan Polypropylene Corporation "NOVATEC MA04A," melt index: 40) was added; furthermore, 0.1 parts by mass of a phenol-based antioxidant (BASF "Irganox 1010") was added with respect to 100 parts by mass of the obtained mixture; the resulting mixture was then quantitatively fed into an extruder (L/D = 45) and melt-kneaded to produce a pellet-shaped resin composition.

### (Example 3)

A pellet-shaped resin composition was produced in the same manner as in Example 1, except that polyethyleneimine (number average molecular weight 1800) and acetic acid were added to and mixed with water to prepare an ammonium carboxylate solution; to this ammonium carboxylate solution, MF-treated cellulose fibers ("Celish KY110N" manufactured by Daicel Miraizu Ltd., water content: 85%), a polyvinyl acetate polymer emulsion containing polyvinyl alcohol as a dispersant ("Cemedine 605, Vinyl Acetate Resin Emulsion Wood Adhesive" manufactured by Cemedine Co., Ltd., water content: 56-60%, polyvinyl acetate polymer content: 40-44%), and calcium carbonate (SHIRAISHI KOGYO KAISHA, LTD. "viscoexcel-30") were added to prepare a mixture (α) such that the blending amounts in the resin composition would be as shown in Table 1; and the blending amount of polypropylene was changed to the blending amount shown in Table 1.

### (Example 4)

A pellet-shaped resin composition was produced in the same manner as in Example 1, except that to MF-treated cellulose fibers ("Celish KY110N" manufactured by Daicel Miraizu Ltd., water content: 85%), polyethyleneimine (number average molecular weight 1800) dissolved in water was added, and further, a polyvinyl acetate polymer emulsion containing polyvinyl alcohol as a dispersant ("Cemedine 605, Vinyl Acetate Resin Emulsion Wood Adhesive" manufactured by Cemedine Co., Ltd., water content: 56-60%, polyvinyl acetate polymer content: 40-44%) was added to prepare a mixture (α) such that the blending amounts in the resin composition would be as shown in Table 1; and the blending amount of polypropylene was changed to the blending amount shown in Table 1.

### (Comparative Example 1)

A pellet-shaped resin composition was produced in the same manner as in Example 1, except that to MF-treated cellulose fibers ("Celish KY110N" manufactured by Daicel Miraizu Ltd., water content: 85%), an ethylene-vinyl acetate copolymer emulsion (Aica Kogyo Company, Limited "Vinyl Copolymer Resin Emulsion Adhesive AE-1000," water content: 44%, ethylene-vinyl acetate copolymer resin content: 56%) and calcium carbonate (SHIRAISHI KOGYO KAISHA, LTD. "viscoexcel-30") were added to prepare a mixture such that the blending amounts in the resin composition would be as shown in Table 1; and the blending amount of polypropylene was changed to the blending amount shown in Table 1.

### <Fluorescence Microscope Observation>

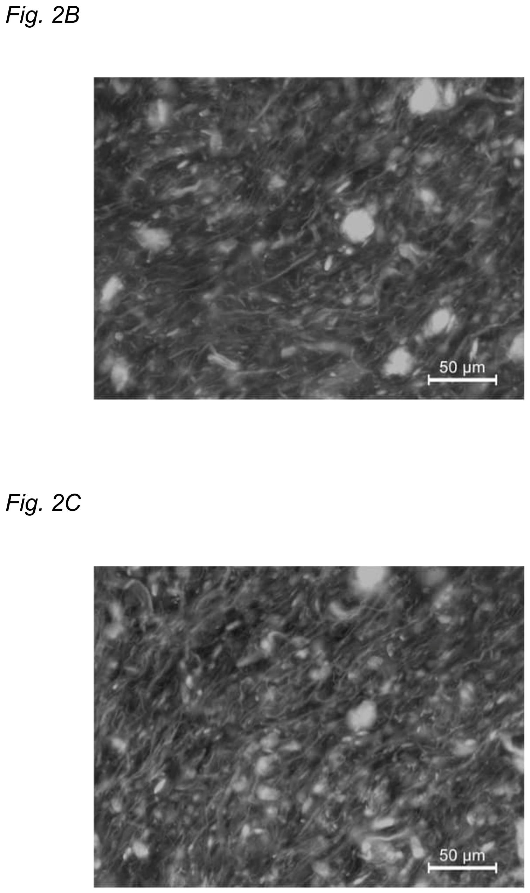

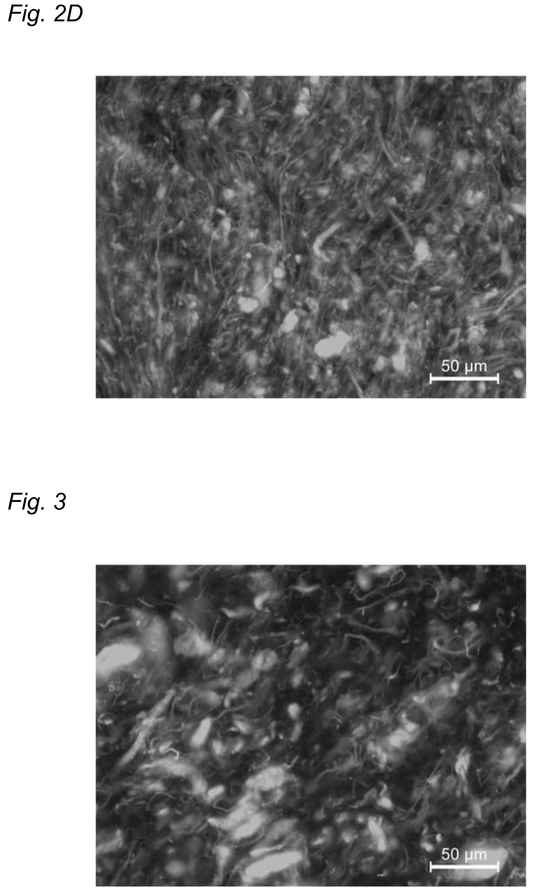

The pellet-shaped resin compositions obtained in Examples 1 to 4 and Comparative Example 1 were observed using a fluorescence microscope. Fig. 2A to Fig. 2D are fluorescence micrographs of the pellet-shaped resin compositions obtained in Examples 1 to 4, respectively, and Fig. 3 is a fluorescence micrograph of the pellet-shaped resin composition obtained in Comparative Example 1. It was confirmed that in the molded articles made from the resin composition of the present invention, which is the melt-kneaded product of the mixture (α) comprising the cellulosic substance (A) and the polyvinyl acetate polymer emulsion (B) with the thermoplastic resin (C) (Examples 1 to 4, Fig. 2A to Fig. 2D), the cellulosic substance (A) was highly dispersed compared to the molded article made from the resin composition which is the melt-kneaded product of the mixture comprising the cellulosic substance (A) and the ethylene-vinyl acetate copolymer emulsion and the thermoplastic resin (C) (Comparative Example 1, Fig. 3).

### <Bending Test>

A bending test was performed on the pellet-shaped resin compositions obtained in Examples 1 to 4 and Comparative Example 1 in accordance with JIS K7171. Specifically, first, using the pellet-shaped resin compositions obtained in Examples 1 to 4 and Comparative Example 1, rectangular test specimens (10 mm × 80 mm × 4 mm) were produced by an injection molding machine. Next, the obtained test specimens were left to stand for 2 days in an atmosphere with a temperature of 23°C and a relative humidity of 50%; a bending test was then performed using a universal testing machine under the conditions of a distance between supports of 64 mm and a test speed of 10 mm/min to measure the flexural modulus and flexural strength. These results are shown in Table 1.

**[Table 1]**

| | Cellulosic substance (A) | Polyvinyl acetate polymer (B) | Thermoplastic resin (C) | Polyamine (D) | Carboxylic acid (E) | | **Filler** (G) | Mechanical strength | |
|---|---|---|---|---|---|---|---|---|---|
| | MF-treated cellulose fiber | Polyvinyl acetate polymer | Polypropylene | Polyethylene imine | Type | Blending amount [parts by mass] | Calcium carbonate | Flexural modulus [GPa] | Flexural strength [MPa] |
| | Blending amount [parts by mass] | Blending amount [parts by mass] | Blending amount [parts by mass] | Blending amount [parts by mass] | | | Blending amount [parts by mass) | | |
| Ex.1 | 10 | 5 | 85 | 0 | --- | 0 | 0 | 3.02 | 68.1 |
| Ex.2 | 10 | 5 | 77.5 | 0.5 | DHA acid | 2 | 5 | 3.28 | 71.8 |
| Ex.3 | 10 | 5 | 79 | 0.5 | Acetic acid | 0.5 | 5 | 3.36 | 66.9 |
| Ex.4 | 10 | 5 | 84.5 | 0.5 | --- | 0 | 0 | 3.16 | 73.7 |
| Comp.Ex.1 | 10 | EVA: 7 | 78 | 0 | --- | 0 | 5 | 2.12 | 53.4 |

| | | | | | | | | | |
|---|---|---|---|---|---|---|---|---|---|
| DHA acid: Dehydroabietic acid EVA: Ethylene-vinyl acetate copolymer | | | | | | | | | |

As shown in Table 1, it was confirmed that the molded articles made from the resin composition of the present invention, which is the melt-kneaded product of the mixture (α) comprising the cellulosic substance (A) and the polyvinyl acetate polymer emulsion (B) with the thermoplastic resin (C) (Examples 1 to 4), were superior in flexural modulus and flexural strength compared to the molded article made from the resin composition which is the melt-kneaded product of the mixture comprising the cellulosic substance (A) and the ethylene-vinyl acetate copolymer emulsion with the thermoplastic resin (C) (Comparative Example 1).

The reason why the molded articles made from the resin compositions obtained in Examples 1 to 4 were superior in flexural modulus and flexural strength compared to the molded article made from the resin composition obtained in Comparative Example 1 is not necessarily clear, but the present inventors presume as follows. That is, in the resin composition obtained in Example 1, it is presumed that the polyvinyl acetate polymer composition layer containing polyvinyl alcohol is formed on the surface of the cellulosic substance (A), as shown in Fig. 1A. In the resin compositions obtained in Examples 2 and 3, it is presumed that the polyvinyl acetate polymer composition layer containing polyvinyl alcohol is formed on the surface of the cellulosic substance (A) via the reaction product layer of the polyamine (D) and the carboxylic acid (E), as shown in Fig. 1C. Furthermore, in the resin composition obtained in Example 4, it is presumed that the polyvinyl acetate polymer composition layer containing polyvinyl alcohol is formed on the surface of the cellulosic substance (A) via the polyamine (D) layer, as shown in Fig. 1B. Since the polyvinyl acetate polymer (a homopolymer of vinyl acetate) has a hydrophobic methyl group in its side chain, the formation of the polyvinyl acetate polymer composition layer on the surface of the cellulosic substance (A) imparts hydrophobicity to the surface of the cellulosic substance (A). As a result, in the resin compositions obtained in Examples 1 to 4, the affinity between the polypropylene and the surface of the cellulosic substance (A) increases, and the cellulosic substance (A) is highly dispersed in the polypropylene; therefore, it is presumed that the molded articles have excellent flexural modulus and flexural strength.

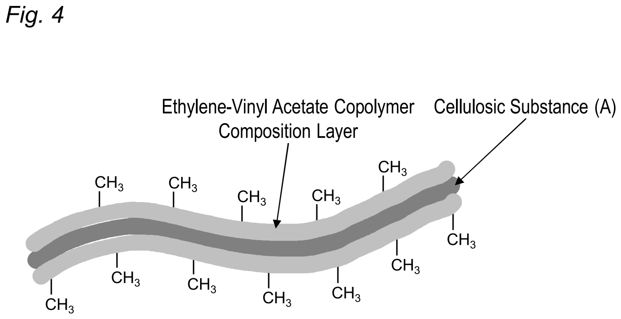

On the other hand, in the resin composition obtained in Comparative Example 1, it is presumed that the ethylene-vinyl acetate copolymer composition layer is formed on the surface of the cellulosic substance (A), as shown in Fig. 4. Since the ethylene-vinyl acetate copolymer has a smaller proportion of constituent units having a hydrophobic methyl group in the side chain compared to the polyvinyl acetate polymer (a homopolymer of vinyl acetate), hydrophobicity is not sufficiently imparted to the surface of the cellulosic substance (A); it is presumed that in the resin composition obtained in Comparative Example 1, the dispersibility of the cellulosic substance (A) in polypropylene was lower compared to the resin compositions obtained in Examples 1 to 4, and the flexural modulus and flexural strength of the molded article decreased.

When the polyamine (D) was added to the mixture (α) (Examples 2 to 4), the flexural modulus was found to improve compared to the case where they were not added (Example 1). Furthermore, when the polyamine (D) was added to the mixture (α) and the carboxylic acid (E) was added to the thermoplastic resin (C) (Example 2), or when the polyamine (D) and the carboxylic acid (E) were added to the mixture (α) (Example 3), the flexural modulus was found to improve compared to the case where the polyamine (D) was added but the carboxylic acid (E) was not added (Example 4). When acetic acid was added as the carboxylic acid (E) (Example 3), the flexural modulus was found to improve compared to the case where the dehydroabietic acid was added (Example 2).

Furthermore, when the polyamine (D) was added to the mixture (α) and the dehydroabietic acid as the carboxylic acid (E) was added to the thermoplastic resin (C) (Example 2), or when the polyamine (D) were added to the mixture (α) but the carboxylic acid (E) were not added (Example 4), the flexural strength was found to improve compared to the case where the polyamine (D) and the carboxylic acid (E) were not added to the mixture (α) (Example 1).

### (Example 5)

First, a pellet-shaped resin composition was produced in the same manner as in Example 1, except that to undried softwood bleached kraft pulp (NBKP, water content: 50%), a polyvinyl acetate polymer emulsion containing polyvinyl alcohol as a dispersant ("Cemedine 605, Vinyl Acetate Resin Emulsion Wood Adhesive" manufactured by Cemedine Co., Ltd., water content: 56-60%, polyvinyl acetate polymer content: 40-44%) was added such that the blending amounts in the resin composition would be as shown in Table 2; the mixture was stirred and mixed for 20 minutes using a kneader to prepare a mixture (α); and the blending amount of polypropylene was changed to the blending amount shown in Table 2.

### (Comparative Example 2)

First, a pellet-shaped resin composition was produced in the same manner as in Example 5, except that to undried softwood bleached kraft pulp (NBKP, water content: 50%), maleic anhydride-modified polypropylene (MAPP, "UMEX 1001" manufactured by Sanyo Chemical Industries, Ltd.) was added such that the blending amounts in the resin composition would be as shown in Table 2; the mixture was stirred and mixed for 20 minutes using a Henschel mixer to prepare a mixture; and the blending amount of polypropylene was changed to the blending amount shown in Table 2.

### (Comparative Example 3)

First, a pellet-shaped masterbatch was produced in the same manner as in Example 5, except that to an amount of undried softwood bleached kraft pulp (NBKP, water content: 50%) corresponding to its blending amount in the resin composition as shown in Table 2, 1/4 of the amount of polypropylene (Japan Polypropylene Corporation "NOVATEC MA04A," melt index: 40) corresponding to its blending amount in the resin composition (blending amount shown in Table 2) was mixed; and 0.1 parts by mass of a phenol-based antioxidant (BASF "Irganox 1010") was added with respect to 100 parts by mass of the obtained mixture.

Thereafter, a pellet-shaped resin composition was produced in the same manner as in Example 5, except that to the obtained masterbatch, the remaining amount of polypropylene (Japan Polypropylene Corporation "NOVATEC MA04A," melt index: 40) was added; and 0.1 parts by mass of a phenol-based antioxidant (BASF "Irganox 1010") was added with respect to 100 parts by mass of the obtained mixture.

### (Comparative Example 4)

Only polypropylene (Japan Polypropylene Corporation "NOVATEC MA04A, " melt index: 40) was subjected to each physical property test.

### (Example 6)

First, a mixture (α) was prepared in the same manner as in Example 5, except that to undried softwood bleached kraft pulp (NBKP, water content: 50%), a polyvinyl acetate polymer emulsion containing polyvinyl alcohol as a dispersant ("Cemedine 605, Vinyl Acetate Resin Emulsion Wood Adhesive" manufactured by Cemedine Co., Ltd., water content: 56-60%, polyvinyl acetate polymer content: 40-44%) was added such that the blending amounts in the resin composition would be as shown in Table 2.

Next, a pellet-shaped masterbatch was produced in the same manner as in Example 5, except that to the obtained mixture (α), 1/4 of the amount of impact-resistant type polypropylene (Japan Polypropylene Corporation "NOVATEC BC6DRF," melt index: 2.5) corresponding to its blending amount in the resin composition (blending amount shown in Table 2) was mixed; and 0.1 parts by mass of a phenol-based antioxidant (BASF "Irganox 1010") was added with respect to 100 parts by mass of the obtained mixture.

Thereafter, a pellet-shaped resin composition was produced in the same manner as in Example 5, except that to the obtained masterbatch, the remaining amount of impact-resistant type polypropylene (Japan Polypropylene Corporation "NOVATEC BC6DRF," melt index: 2.5) was added; and 0.1 parts by mass of a phenol-based antioxidant (BASF "Irganox 1010") was added with respect to 100 parts by mass of the obtained mixture.

### (Comparative Example 5)

First, a pellet-shaped resin composition was produced in the same manner as in Example 6, except that to undried softwood bleached kraft pulp (NBKP, water content: 50%), maleic anhydride-modified polypropylene (MAPP, "UMEX 1001" manufactured by Sanyo Chemical Industries, Ltd.) was added such that the blending amounts in the resin composition would be as shown in Table 2; the mixture was stirred and mixed for 20 minutes using a Henschel mixer to prepare a mixture; and the blending amount of polypropylene was changed to the blending amount shown in Table 2.

### (Comparative Example 6)

First, a pellet-shaped masterbatch was produced in the same manner as in Example 6, except that to an amount of undried softwood bleached kraft pulp (NBKP, water content: 50%) corresponding to its blending amount in the resin composition as shown in Table 2, 1/4 of the amount of impact-resistant type polypropylene (Japan Polypropylene Corporation "NOVATEC BC6DRF, " melt index: 2.5) corresponding to its blending amount in the resin composition (blending amount shown in Table 2) was mixed; and 0.1 parts by mass of a phenol-based antioxidant (BASF "Irganox 1010") was added with respect to 100 parts by mass of the obtained mixture.

Thereafter, a pellet-shaped resin composition was produced in the same manner as in Example 6, except that to the obtained masterbatch, the remaining amount of impact-resistant type polypropylene (Japan Polypropylene Corporation "NOVATEC BC6DRF," melt index: 2.5) was added; and 0.1 parts by mass of a phenol-based antioxidant (BASF "Irganox 1010") was added with respect to 100 parts by mass of the obtained mixture.

### (Comparative Example 7)

Only impact-resistant type polypropylene (Japan Polypropylene Corporation "NOVATEC BC6DRF," melt index: 2.5) was subjected to each physical property test.

### <Bending Test>

A bending test was performed in accordance with JIS K7171 on the pellet-shaped resin compositions obtained in Examples 5 and 6 and Comparative Examples 2, 3, 5, and 6, and on the polypropylenes of Comparative Examples 4 and 7. Specifically, for the pellet-shaped resin compositions obtained in Examples 5 and 6 and Comparative Examples 2, 3, 5, and 6, and the polypropylenes of Comparative Examples 4 and 7, rectangular test specimens were produced and a bending test was performed in the same manner as in the cases of Examples 1 to 4 and Comparative Example 1, to measure the flexural modulus and flexural strength. These results are shown in Table 2.

### <Charpy Impact Test>

A Charpy impact test was performed in accordance with JIS K7111-1 on the pellet-shaped resin compositions obtained in Examples 5 and 6 and Comparative Examples 2, 3, 5, and 6, and on the polypropylenes of Comparative Examples 4 and 7. Specifically, first, using the pellet-shaped resin compositions obtained in Examples 5 and 6 and Comparative Examples 2, 3, 5, and 6, and the polypropylenes of Comparative Examples 4 and 7, rectangular test specimens (10 mm × 80 mm × 4 mm) were produced by an injection molding machine. Next, the obtained test specimens were mounted on a Charpy impact tester, and a Charpy impact test was performed under the condition of a hammer weight of 2 J to measure the Charpy impact strength. The results are shown in Table 2.

**[Table 2]**

| | Cellulosic substance (A) | Polyvinyl acetate polymer (B) | Thermoplastic resin (C) | | Acid anhydride-modified polyolefin (F) | Mechanical strength | | |
|---|---|---|---|---|---|---|---|---|
| | NBKP | Polyvinyl acetate polymer | Type | Blending amount [parts by mass] | MAPP | Flexural modulus [GPa] | Flexural strength [MPa] | Charpy impact strength [kJ/m²] |
| | Blending amount [parts by mass] | Blending amount [parts by mass] | | | Blending amount [parts by mass] | | | |
| Ex.5 | 20 | 4 | Homo-PP | 76 | 0 | 4.29 | 80.4 | 10.0 |
| Comp.Ex.2 | 25 | 0 | Homo-PP | 70 | 5 | 3.57 | 73.1 | 3.3 |
| Comp.Ex.3 | 25 | 0 | Homo-PP | 75 | 0 | 3.71 | 68.3 | 4.4 |
| Comp.Ex.4 | 0 | 0 | Homo-PP | 100 | 0 | 2.25 | 63.6 | 2.1 |
| Ex.6 | 10 | 2 | Block-PP | 88 | 0 | 2.03 | 43.2 | 20.0 |
| Comp.Ex.5 | 10 | 0 | Block-PP | 88 | 2 | 1.84 | 43.0 | 7.6 |
| Comp.Ex.6 | 10 | 0 | Block-PP | 90 | 0 | 1.95 | 43.5 | 10.0 |
| Comp.Ex.7 | 0 | 0 | Block-PP | 100 | 0 | 1.40 | 37.1 | 66.0 |

| | | | | | | | | |
|---|---|---|---|---|---|---|---|---|
| Homo-PP: Homopolypropylene "NOVATEC MA04A" manufactured by Japan Polypropylene Corporation Block-PP: Block polypropylene "NOVATEC BC6DRF" manufactured by Japan Polypropylene Corporation | | | | | | | | |

As shown in Table 2, it was confirmed that the molded articles made from the resin composition of the present invention, which is the melt-kneaded product of the mixture (α) comprising the cellulosic substance (A) and the polyvinyl acetate polymer emulsion (B) with the thermoplastic resin (C) (Examples 5 and 6), were superior in flexural modulus, flexural strength, and Charpy impact strength compared to the molded articles made from the resin composition which is the melt-kneaded product of the mixture comprising the cellulosic substance (A) and the acid anhydride-modified polyolefin (F) (acting as a dispersant) with the thermoplastic resin (C) (Comparative Examples 2 to 5). From these results, it was confirmed that even when an unrefined cellulosic substance (A) was used, by blending a polyvinyl acetate polymer emulsion (B) containing polyvinyl alcohol as a dispersant, a molded article with excellent mechanical strength could be obtained.

The molded article made from the resin composition obtained in Example 5 was superior in flexural modulus, flexural strength, and Charpy impact strength compared to the molded articles made from the resin compositions obtained in Comparative Examples 2 and 3, despite having a smaller blending amount of the cellulosic substance (A). This is considered to be because the cellulosic substance (A) was more highly dispersed in the resin composition obtained in Example 5 compared to the resin compositions obtained in Comparative Examples 2 and 3.

### [Industrial Applicability]

As described above, according to the present invention, it is possible to obtain a molded article which is made from a resin composition comprising a cellulosic substance and a thermoplastic resin and has excellent mechanical strength.

Therefore, it becomes possible to produce exterior panels and interior materials for automobiles, housings for electrical equipment, building materials, and the like with a smaller amount of the resin composition of the present invention compared to conventional resin compositions comprising a cellulosic substance and a thermoplastic resin, and the present invention is useful for suppressing greenhouse gas emissions. By using the resin composition of the present invention, various molded articles can be produced at low cost. Furthermore, the molded article of the present invention can be used not only in the field of conventional fiber-reinforced plastics but also in fields where even higher mechanical strength (for example, flexural strength) is required.

## Claims

1. A resin composition, which is a melt-kneaded product of a mixture (α) comprising a cellulosic substance (A) and a polyvinyl acetate polymer emulsion (B) containing polyvinyl alcohol as a dispersant, and a thermoplastic resin (C).

2. The resin composition according to claim 1, wherein the mixture (α) further comprises a polyamine (D).

3. The resin composition according to claim 2, wherein the mixture (α) further comprises a carboxylic acid (E).

4. The resin composition according to claim 2, which is a melt-kneaded product of the mixture (α) and a melt-kneaded product (β) comprising the thermoplastic resin (C) and a carboxylic acid (E).

5. The resin composition according to claim 1, wherein the content of the polyvinyl acetate polymer emulsion (B) in the resin composition is 0.1 to 15% by mass in terms of the polyvinyl acetate polymer.

6. A molded article, which is made from the resin composition according to any one of claims 1 to 5.

7. A method for producing a resin composition, comprising:
a step of mixing a cellulosic substance (A) and a polyvinyl acetate polymer emulsion (B) containing polyvinyl alcohol as a dispersant to prepare a mixture (α); and
a step of melt-kneading the mixture (α) and a thermoplastic resin (C).

8. The method for producing a resin composition according to claim 7, wherein a polyamine (D) is further mixed into the mixture (α).

9. The method for producing a resin composition according to claim 8, wherein a carboxylic acid (E) is further mixed into the mixture (α).

10. The method for producing a resin composition according to claim 8, further comprising a step of melt-kneading the thermoplastic resin (C) and a carboxylic acid (E) to prepare a melt-kneaded product (β),
wherein the mixture (α) and the melt-kneaded product (β) are melt-kneaded.

11. The method for producing a resin composition according to claim 7, wherein the cellulosic substance (A) and the polyvinyl acetate polymer emulsion (B) are mixed such that the content of the polyvinyl acetate polymer emulsion (B) in the resulting resin composition is 0.1 to 15% by mass in terms of the polyvinyl acetate polymer.
